Europäisches Patentamt

European Patent Office

Office européen des brevets

(19)

(11) EP 1 209 614 A1

## (12) DEMANDE DE BREVET EUROPEEN

(43) Date de publication:
**29.05.2002 Bulletin 2002/22**

(51) Int Cl.7: **G06K 9/62**, G06F 17/30

(21) Numéro de dépôt: **01204426.9**

(22) Date de dépôt: **20.11.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **28.11.2000 FR 0015351**

(71) Demandeur: **Koninklijke Philips Electronics N.V.**
**5621 BA Eindhoven (NL)**

(72) Inventeurs:
- **Mory, Benoît**
**75008 Paris (FR)**
- **Santini, Nicolas**
**75008 Paris (FR)**

(74) Mandataire: **de la Fouchardière, Marie-Noelle**
**Société Civile "SPID"**
**156, Boulevard Haussmann**
**75008 Paris (FR)**

### (54) Procédés de partition d'un ensemble d'objets et procédé de recherche dans une partition d'un ensemble d'objets

(57) L'invention concerne un procédé de partition d'un ensemble d'objets qui comporte une phase d'initialisation pour déterminer une partition ayant un nombre optimal de classes, et une phase de modification de cette partition pour obtenir une partition dont les classes ont un contenu optimal du point de vue de la recherche d'objets.

L'invention concerne également un procédé de partition multi-niveaux d'un ensemble d'objets qui utilise un tel procédé de partition pour créer structure arborescente d'objets.

Elle concerne enfin un procédé de recherche par l'exemple pour rechercher un certain nombre d'objets les plus proche d'un exemple dans la structure arborescente ainsi obtenue.

Référence : figure 1.

Application : metadonnées, description de prises de vue, de type MPEG-7 notamment.

FIG.1

EP 1 209 614 A1

## Description

<u>Domaine de l'invention</u>

L'invention concerne un procédé de partition d'un ensemble d'objets comportant :

- une première étape itérative de partition, qui utilise une première partition constituée de classes contenant un objet, et qui à chaque itération fond deux classes qui maximisent un critère de similarité pour créer une nouvelle partition utilisée comme partition initiale pour l'étape suivante, jusqu'à obtenir une partition ne contenant qu'une seule classe,
- une étape de sélection, parmi les partitions obtenues, d'une partition comportant un nombre optimal de classes.

Elle concerne également un procédé de partition multi-niveaux d'un ensemble d'objets, qui utilise un tel procédé de partition.

Elle concerne enfin un procédé de recherche d'un nombre prédéterminé d'objets les plus proches d'un exemple, dans une structure arborescente d'objets créée en utilisant un tel procédé de partition multi-niveaux.

L'invention concerne par ailleurs des programmes d'ordinateur pour la mise en oeuvre de tels procédés. Elle concerne aussi des équipements qui comportent des moyens de stockage et de traitement de données, dont notamment des moyens de mise en oeuvre de tels procédés. Elle concerne enfin un système de transmission de données qui comporte au moins un tel équipement.

L'invention a d'importantes applications dans le domaine de la classification d'informations, notamment d'informations relatives à des données audio et/ ou vidéo, par exemple de descriptions de type MPEG-7.

Les capacités de transmission et de stockage d'informations augmentent de façon considérable, si bien que dans de nombreux domaines, y compris dans le domaine de l'électronique grand public, l'utilisateur a désormais des difficultés pour gérer l'information dont il dispose. Dans ce contexte, les méthodes de partition d'un ensemble d'objets deviennent de plus en plus importantes. Elles s'appliquent notamment à la navigation dans un ensemble d'objets, et à la recherche d'objets.

<u>Arrière plan technologique de l'invention</u>

L'article « Symbolic Clustering using a new dissimilarity measure » de K. Chidananda Gowda et E. Diday publié dans la revue « Pattern Recognition », vol. 24 n°6, pp567-578, en 1991 décrit un procédé de partition d'un ensemble d'objets tel que cité dans le paragraphe introductif, et appelé « hierarchical agglomerative clustering methodology ».

Ce procédé de partition fournit un nombre optimal de classes. En revanche, la partition obtenue n'est pas bien adaptée à la recherche d'objets.

<u>Résumé de l'invention</u>

L'invention a notamment pour but de proposer un procédé de partition d'un ensemble d'objets particulièrement bien adapté à la recherche d'objets. Pour cela, un procédé selon l'invention et tel que décrit dans le paragraphe introductif est caractérisé en ce qu'il comporte :

- une étape de calcul d'éléments représentatifs des classes de la partition sélectionnée,
- une seconde étape itérative de partition qui utilise la partition sélectionnée comme première partition courante, et qui à chaque itération crée une nouvelle partition en associant chaque objet dudit ensemble à l'élément représentatif de la partition courante dont il est le plus proche, et calcule des éléments représentatifs des classes de la nouvelle partition, la nouvelle partition constituant la partition courante pour l'itération suivante, jusqu'à ce que les éléments représentatifs de la nouvelle partition soient identiques aux éléments représentatifs de la partition courante.

Ainsi, le procédé selon l'invention consiste à déterminer dans un premier temps une partition qui contient un nombre optimal de classes, puis à modifier les classes de façon à ce que leur contenu soit adapté à la recherche d'objets.

Il faut noter que l'article « An efficient K-means clustering algorithm » de K.Alsabti, S. Ranka et V. Singh, publié à l'occasion du « IPPS/SPDP Worshop on High Performance Data Mining, 1998, Orlando, Florida » décrit un procédé de partition appelé « K-means » qui permet de découper un ensemble d'objets en un nombre N de classes connu à priori, en choisissant N prototypes de départ. Ce procédé est itératif. A chaque itération, chaque objet est regroupé avec le prototype dont il est le plus proche afin de déterminer des classes, puis le prototype de chaque classe est recalculé. Le nouveau prototype obtenu sert de prototype de départ pour l'itération suivante. La partition finale est obtenue lorsque la convergence est atteinte, c'est-à-dire lorsqu'à la fin d'une itération, tous les nouveaux prototypes obtenus correspondent aux prototypes de départ.

Ce procédé nécessite de connaître à priori le nombre de classes de la partition à construire, et de disposer d'un ensemble de prototypes de départ.

L'invention consiste donc notamment à utiliser un procédé de type « hierarchical agglomerative clustering » pour initialiser un procédé de type « K-means », afin de fournir un procédé de partition dont le nombre de classes et le contenu des classes est optimal du point de vue de la recherche d'objets.

D'une façon générale, l'invention est applicable à tout type d'objets, dès lors qu'une mesure de similarité f est définie pour ce type d'objets, et que cette mesure de similarité vérifie les conditions suivantes :

- f est une application qui a deux objets de l'ensemble de départ associe un nombre réel,
- ce nombre réel est identique quelque soit l'ordre dans lequel on considère les deux objets,
- le nombre réel associé à deux objets identiques est supérieur au nombre réel associé à deux objets différents.

Dans un mode de réalisation particulièrement intéressant de l'invention , lesdits objets sont des metadonnées, c'est-à-dire des structures contenant un ensemble de données. Il s'agit par exemple de descriptions de prises de vue (video shots en anglais), notamment de descriptions de type MPEG-7. Le projet de norme MPEG-7 définit en effet un certain nombre de descripteurs pour prises de vue vidéo (des descripteurs de couleur, de texture, de mouvement de caméra...), ainsi que des mesures de similarité associées à ces descripteurs. Pour plus de détails on se reportera aux document ISO/IEC JTC1/SC29/WG11 N3521 (juillet 2000) intitulé « Coding of moving pictures and associated audio information » qui renvoie au document « Visual Working draft » version 4.0.

Un deuxième but de l'invention est de proposer un procédé de partition multi-niveaux d'un ensemble d'objets. Conformément à l'invention, un tel procédé comporte:

- une étape de partition qui utilise un procédé de partition tel que décrit ci-dessus pour déterminer une partition d'un groupe d'objets,
- une étape de détermination d'éléments représentatifs des classes de la partition obtenue,
- une étape de stockage desdits éléments représentatifs dans une structure arborescente,
- lesdites étapes étant exécutées une première fois avec un groupe d'objets constitué par ledit ensemble, puis répétées avec des groupes d'objets constitués par les classes des partitions obtenues, jusqu'à obtenir des classes qui répondent à un critère prédéterminé,
- une étape de stockage de la dernière partition dans ladite structure arborescente.

La structure arborescente ainsi obtenue constitue une partition à plusieurs niveaux de l'ensemble d'objets. Ce type de partition est particulièrement avantageux pour faire de la recherche dans un ensemble contenant un grand nombre d'objets, parce qu'il permet d'accélérer la recherche. En effet, avec une partition à un seul niveau, lorsque la taille de l'ensemble d'objets augmente de façon significative, cela entraîne soit l'augmentation du nombre de classes, soit l'augmentation du nombre d'objets contenus dans une classe. Dans les deux cas, on est amené à comparer l'exemple recherché à un beaucoup plus grand nombre d'objets. Le temps de traitement augmente donc considérablement. En revanche, avec une partition multi-niveaux, l'exemple recherché n'est comparé qu'à un nombre restreint d'objets à chaque niveau de la partition. L'augmentation de la taille de l'ensemble a donc beaucoup moins d'influence sur le temps de traitement de la recherche.

Un troisième but de l'invention est de proposer un procédé de recherche d'un nombre prédéterminé d'objets les plus proches d'un exemple, dans une structure arborescente d'objets qui comporte des noeuds et des feuilles et qui a été créée en utilisant un procédé de partition multi-niveaux tel que décrit ci-dessus.

Conformément à l'invention, un tel procédé de recherche comporte les étapes suivantes :

- une étape de parcours de la structure arborescente à partir d'un noeud, vers des feuilles, en passant par les noeuds qui contiennent les éléments représentatif sont les plus proches de l'exemple, pour sélectionner une ou plusieurs feuilles correspondant à un ou plusieurs objets,
- une étape de test pour vérifier si le nombre de feuilles sélectionnées est inférieur audit nombre prédéterminé d'objets,
- et, si le nombre de feuilles sélectionnées est inférieur audit nombre prédéterminé d'objets, une nouvelle itération desdites étapes, à partir du noeud frère du dernier noeud parcouru, qui contient l'élément représentatif le plus proche dudit exemple.

Brève description des figures

L'invention sera mieux comprise, et d'autres détails apparaîtront dans la description qui va suivre en regard des dessins annexés donnés à titre d'exemples non limitatifs et dans lesquels :

- la figure 1 est un diagramme en blocs d'un exemple de procédé de partition selon l'invention,
- la figure 2 est un diagramme en blocs d'un exemple de procédé de partition multi-niveaux selon l'invention,
- la figure 3 est un schéma d'un exemple de structure arborescente obtenue avec un procédé de partition multi-niveaux selon l'invention,
- la figure 4 est un schéma d'un exemple d'équipement selon l'invention,
- la figure 5 est un schéma d'un exemple de système de transmission selon l'invention,
- la figure 6 est un organigramme décrivant le fonctionnement d'un exemple de procédé de recherche par l'exemple selon l'invention.

Description de modes de réalisation de l'invention

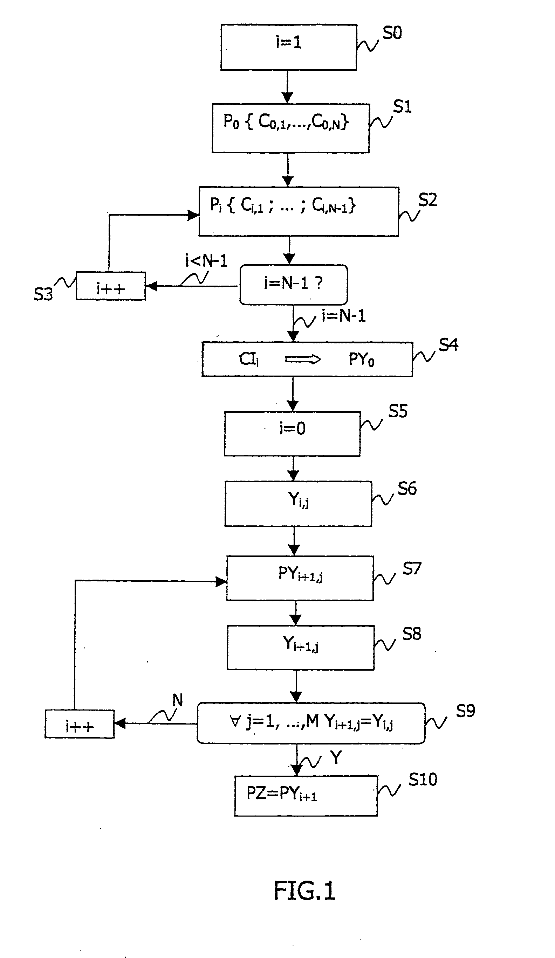

Sur la figure 1, on a représenté un diagramme en blocs d'un exemple de procédé de partition selon l'invention. On considère dans la suite que $\{x_1, x_2,...,x_N\}$ sont N objets d'un ensemble d'objets X. Le procédé de la figure 1 comporte les étapes suivantes:

(S0) : l'indice i est initialisé : i=1.

(S1) : Une partition initiale $P_0$ de l'ensemble X est définie. Cette partition initiale $P_0$ comporte N classes $C_{0,1}$, ..., $C_{0,N}$ contenant chacune un objet.

(S2) : Les deux classes de la partition $P_{i-1}$ qui maximisent un certain critère de similarité sont fondues de façon à constituer une nouvelle partition $P_i$ comportant N-i classes.

(S3) : L'étape S2 est répétée jusqu'à obtenir une seule classe contenant tous les objets de l'ensemble considéré (i=2,..., N-1).

(S4) : Pour chaque partition $P_i$ ainsi obtenue, un indicateur $CI_i$ est calculé. La partition $PY_0$ pour laquelle cet indicateur est maximum est la partition qui contient un nombre optimal de classes M. A titre d'exemple on utilise un indicateur du type de celui qui est décrit dans l'article précité de K. Chidananda Gowda et E. Diday, à savoir:

$CI_i = \dfrac{R_i}{R_{i-1}}$ avec $R_i = \dfrac{MIN_i}{MIN_{i-1} + MIN_{i-1}}$ où $MIN_i$ est la dissimilarité minimum entre deux classes pour la partition $P_i$.

La dissimilarité D(Z1, Z2) entre deux classes Z1 et Z2 est par exemple définie de la façon suivante : D(Z1, Z2)= 1- f(Z1, Z2) où f(Z1, Z2) est la similarité entre les deux classes Z1 et Z2.

(S5) : L'indice i est réinitialisé (i=0).

(S6) : On calcule un élément représentatif de chaque classe de la partition $PY_i$. Ces éléments représentatifs sont notés $Y_{i,j}$ où j=1, ..., M (M étant le nombre de classes des partitions $PY_i$).

(S7) : Une nouvelle partition $PY_{i+1}$ est créée en associant les objets de l'ensemble de départ à l'élément représentatif $Y_{i,j}$ dont ils sont le plus proches. La proximité de deux objets est déterminée en utilisant une fonction de similarité f qui vérifie les propriétés suivantes :

- f est une application qui a deux objets de l'ensemble de départ associe un nombre réel,
- ce nombre réel est identique quelque soit l'ordre dans lequel on considère les deux objets,
- le nombre réel associé à deux objets identiques est supérieur au nombre réel associé à deux objets différents.

(S8) : On calcule un élément représentatif $Y_{i+1,j}$ pour chaque classe de la partition $PY_{i+1}$ ainsi obtenue.

(S9) : On vérifie si la convergence est atteinte, c'est-à-dire si $\forall j = 1,...,M \ Y_{i+1,j} = Y_{i,j}$. Si c'est le cas (flèche Y sur la figure), le procédé de partition se termine à l'étape (S10). Sinon (flèche N), l'indice i est incrémenté et les étapes (S7), (S8) et (S9) sont répétées avec la nouvelle valeur de i.

(S10) : le procédé de partition fournit une partition optimale PZ qui est égale à $PY_{i+1}$.

De façon avantageuse, à l'étape (S2), pour déterminer les deux classes qui maximisent le critère de similarité, on utilise les éléments représentatifs des classes, c'est-à-dire que l'on considère que deux classes maximisent le critère de similarité lorsque leurs éléments représentatifs maximisent ce critère. Cela signifie que l'étape (S2) comporte une opération de calcul des éléments représentatifs de chaque classe de la partition $P_{i-1}$. Dans ce cas, l'opération indiquée à l'étape (S6) est en fait effectuée à l'étape (S2).

Dans un premier mode de réalisation, le critère de similarité est constitué par la fonction de similarité elle-même, c'est-à-dire que les deux classes qui sont fondues sont celles dont les éléments représentatifs maximisent la fonction de similarité f.

Dans un second mode de réalisation plus performant, le critère de similarité tient compte d'un facteur de pondération. A titre d'exemple, les deux classes qui sont fondues sont celles dont les éléments représentatifs minimisent une fonction de dissimilarité pondérée Dw du type de celle décrite dans l'article précité de K. Chidananda Gowda et E. Diday, à savoir:

$$D_w(Y_{i,j}, Y_{i,k}) = D(Y_{i,j}, Y_{i,k}) \cdot \sqrt{\dfrac{n_j \cdot n_k}{n_j + n_k}}$$

où $n_j$ et $n_k$ sont des poids affectés aux classes d'indice j et k respectivement, où D est la fonction de dissimilarité, et Dw la fonction de dissimilarité pondérée.

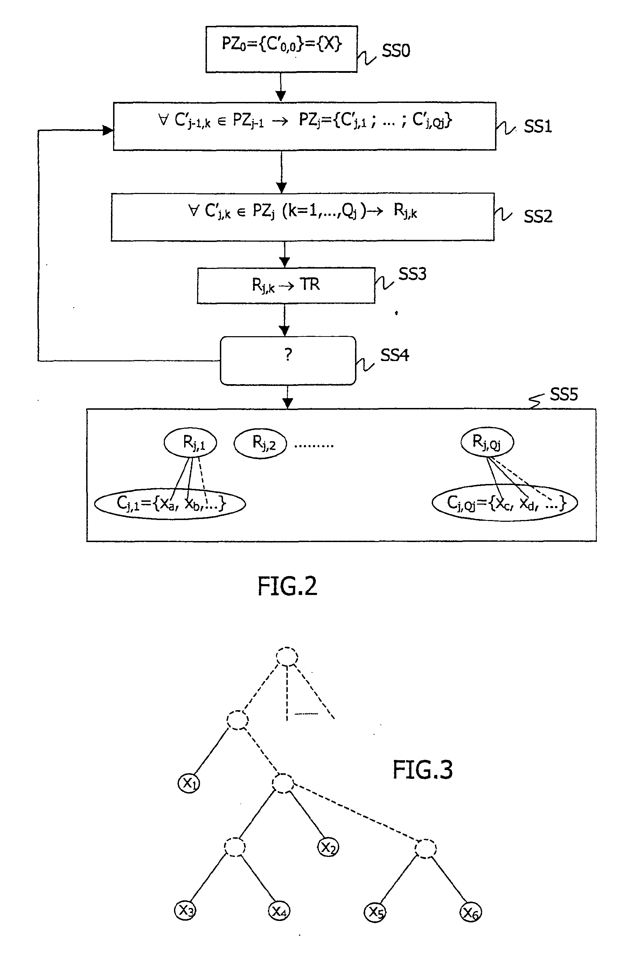

Sur la figure 2, on a représenté un diagramme en blocs d'un exemple de procédé de partition multi-niveaux selon l'invention. Le procédé de partition multi-niveaux de la figure 2 comporte les étapes suivantes :

(SS0) : Une partition initiale $PZ_0$ est définie. Cette partition comporte une classe $C_{0,0}$ qui contient tous les objets de l'ensemble X.

(SS1) : Une partition $PZ_j$ est créée pour chaque classe $C_{j-1,k}$ (k=1, ..., $Q_{j-1}$) de la partition $PZ_{j-1}$ qui contient plus d'un objet, en utilisant le procédé de partition décrit à la figure 1. Cette partition comporte $Q_j$ classes $C_{j,1}$, $C_{j,2}$, ..., $C_{j,Qj}$.

(SS2) : Un élément représentatif $R_{j,1}$, $R_{j,2}$, ..., $R_{j,Qj}$ est déterminé pour chaque classe $C_{j,1}$, $C_{j,2}$, ..., $C_{j,Qj}$ de la partition $PZ_j$.

(SS3) : Ces éléments représentatifs sont stockés dans une structure arborescente TR de telle sorte que chaque élément représentatif $R_{j,1}$, $R_{j,2}$, ..., $R_{j,Qj}$ soit un fils de l'élément représentatif de la classe $C_{j-1,k}$.

(SS4) : Les étapes (SS1), (SS2) et (SS3) sont répétées jusqu'à ce que la partition $PZ_j$ vérifie un critère prédéterminé.

(SS5) : Lorsque le critère prédéterminé est vérifié, les objets des classes $C_{j,1}$, $C_{j,2}$, ..., $C_{j,Qj}$ sont stockés de façon à constituer les feuilles des noeuds $R_{j,1}$, $R_{j,2}$, ..., $R_{j,Qj}$ respectivement.

De façon avantageuse, l'élément représentatif d'une classe est le centroïde de la classe. Pour déterminer le centroïde d'une classe, on calcule d'abord un élément fictif qui présente une même similarité avec tous les éléments de la classe. Le centroïde est constitué par l'élément de la classe qui est le plus proche de cet élément fictif.

Dans un premier exemple, le procédé de partition multi-niveaux se termine (c'est-à-dire que la condition prédéterminée est considérée comme vérifiée) lorsque le nombre d'objets par classe est le plus proche possible d'une valeur maximum.

Dans un deuxième exemple, le procédé de partition multi-niveaux se termine lorsque les objets contenus dans les classes de la partition $PZ_j$ sont suffisamment proches du centroïde de la classe.

Sur la figure 3 on a représenté un exemple d'arbre obtenu en appliquant un tel procédé de partition multi-niveaux. Les noeuds de cet arbre sont représentés en pointillés. Ils contiennent un élément représentatif d'une classe. Les feuilles de cet arbre sont représentées en traits pleins. Elles contiennent les objets $x_1$, ..., $x_N$ de l'ensemble X.

De façon avantageuse, les objets de l'ensemble X sont des descriptions de données audio - vidéo, par exemple des descriptions de type MPEG-7. Ces descriptions MPEG-7 concernent par exemple des prises de vue, c'est-à-dire des séquences vidéo qui ne contiennent aucune coupure. Une prise de vue vidéo est par exemple décrite en termes de mouvement de caméra, de couleur, de texture... Comparer deux prises de vue revient à comparer les descriptions de ces deux prises de vue qui sont des instances d'un même descripteur, par exemple un descripteur de couleur, ou un descripteur d'une combinaison couleur/texture. Une telle comparaison se fait en utilisant une mesure de similarité.

D'une façon générale, la mesure de similarité f utilisée doit vérifier les propriétés suivantes :

-　f est une application qui a deux objets de l'ensemble de départ associe un nombre réel,
-　ce nombre réel est identique quelque soit l'ordre dans lequel on considère les deux objets,
-　le nombre réel associé à deux objets identiques est supérieur au nombre réel associé à deux objets différents.

Dans le cas des descriptions MPEG-7, on utilise avantageusement les mesures de similarité proposées dans la recommandation MPEG-7 pour chaque type de descripteur.

L'invention n'est pas limitée aux descriptions de type MPEG-7, ni aux descripteurs et aux mesures de similarité définies dans la recommandation MPEG-7. Tout type de descripteur est utilisable dès lors qu'une mesure de similarité est définie pour ce type de descripteur, et que cette mesure de similarité vérifie les 3 conditions définies ci-dessus.

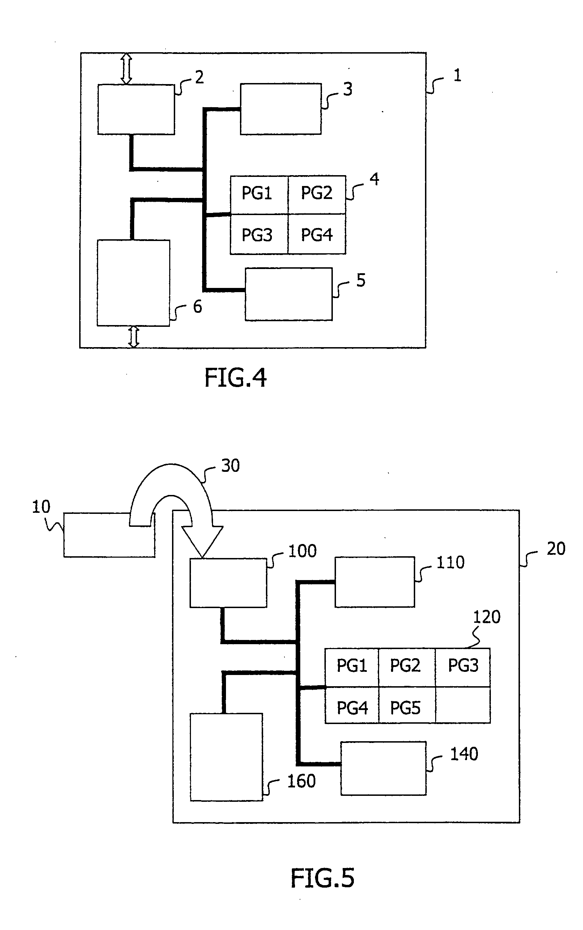

Sur la figure 4 on a représenté un exemple d'un équipement selon l'invention. Cet équipement est une caméra 1 qui comporte des moyens 2 de capture de vidéo (par exemple de type CCD). La caméra 1 comporte également une mémoire 3 pour stocker des données et une mémoire 4 pour stocker des programmes d'ordinateur, un ensemble à microprocesseurs 5 pour exécuter lesdits programmes, et une interface utilisateur 6 pour recevoir des commandes passées par l'utilisateur et pour fournir des données à l'utilisateur. La mémoire 4 contient notamment un ensemble PG1 d'un ou plusieurs programmes pour coder la vidéo capturée. Cet ensemble de programmes PG1 délivre notamment des descriptions de prises de vue de type MPEG-7 qui sont stockées dans la mémoire 3. La mémoire 4 contient également :

-　un programme PG2 selon l'invention pour faire une partition d'un ensemble composé de plusieurs desdites descriptions MPEG-7,
-　un programme PG3 qui fournit une partition à plusieurs niveaux des descriptions de cet ensemble,
-　et un ensemble PG4 contenant un ou plusieurs programmes d'application qui utilisent la structure arborescente fournie par le programme PG3.

Sur la figure 5 on a représenté un schéma d'un exemple de système de transmission selon l'invention. Un tel système comporte une source de donnée 10, un équipement utilisateur 20, et un média 30 pour transporter des signaux entre la source de données 10 et l'équipement utilisateur 20. La source de données 10 est par exemple une source de données vidéo. Le média de transmission qui transmet ces données vidéo à l'équipement utilisateur est par exemple constitué par un réseau câblé, un réseau de transmission par satellite, une liaison radio... L'équipement utilisateur comporte un circuit 100 de réception servant notamment à recevoir des données transmises par la source 10, une mémoire 110 pour stocker des données, notamment les données reçues, une mémoire 120 qui contient des programmes d'ordinateur, un ensemble à microprocesseurs 140 pour exécuter lesdits programmes, et une interface utilisateur 160 pour recevoir des commandes passées par l'utilisateur et pour fournir des données à l'utilisateur. La mémoire 120 contient notamment un programme PG5 pour élaborer à partir des données vidéo reçues une base de données d'objets qui sont des descriptions MPEG-7 relatives à des prises de vue. Elle contient également un programme PG2 selon l'invention pour faire une partition d'un ensemble comportant des objets de cette base de données, un programme PG3 qui fournit une partition à plusieurs niveaux des objets d'un tel ensemble, et un ensemble PG4 d'un ou plusieurs programmes d'application qui utilisent la structure arborescente fournie par le programme PG3.

A titre d'exemple, l'ensemble PG4 comporte un premier programme d'application PG6 qui est un programme de navigation. Un programme de navigation permet à l'utilisateur de parcourir la base de données en donnant à chaque niveau de la structure arborescente, en fonction des résultats obtenus, une nouvelle instruction pour progresser dans l'arbre.

A titre d'exemple, l'ensemble PG4 comporte un second programme d'application PG6 qui est un programme de recherche par l'exemple. Un programme de recherche par l'exemple permet à un utilisateur de choisir un descripteur et un exemple, parmi un ensemble de descripteurs et parmi un ensemble d'exemples qui lui sont proposés, et de fixer le nombre de résultats qu'il souhaite obtenir, pour servir de base à une recherche par l'exemple. Le programme de recherche par l'exemple retourne le nombre de résultats demandé par l'utilisateur, ces résultats étant constitués par les descriptions les plus proches de l'exemple choisi du point de vue du descripteur choisi.

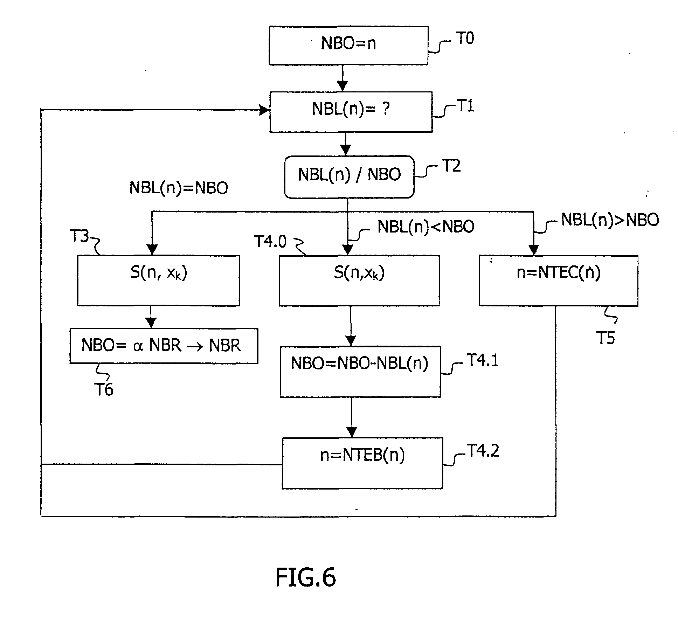

Sur la figure 6 on a représenté un organigramme décrivant le fonctionnement d'un exemple de procédé de recherche susceptible d'être mis en oeuvre par un programme PG6. Le procédé de la figure 6 part du noeud racine de l'arbre. Il comporte les étapes suivantes :

- (T0) : Une variable NBO, qui indique le nombre d'objets qu'il reste à sélectionner, est initialisée. Sa valeur initiale est égale au nombre prédéterminé d'objets à sélectionner NBO=N.
- (T1) : Le nombre de feuilles NBL(n) qui dépendent du noeud courant n est déterminé. Les feuilles qui dépendent d'un noeud sont les feuilles de ce noeud, ainsi que les feuilles de noeuds qui dépendent de ce noeud.
- (T2) : Le nombre de feuilles qui dépendent du noeud courant NBL(n) est comparé au nombre d'objets qu'il reste à sélectionner NBO.
- (T3) : S'il sont égaux (NBL(n)=NBO), les objets $x_k$ contenus dans les feuilles qui dépendent du noeud courant n sont sélectionnés (sur la figure cette opération de sélection est notée S(n, $x_k$)). Et le procédé se termine.
- (T4.0) : Si le nombre de feuilles NBL(n) est inférieur au nombre d'objets qu'il reste à sélectionner (NBL (n)<NBO), les objets $x_k$ contenus dans les feuilles qui dépendent du noeud courant n sont sélectionnés (S(n, $x_k$)).
- (T4.1) : La variable NBO qui indique le nombre d'objets qu'il reste à sélectionner est mise à jour en soustrayant le nombre de feuilles NBL(n) au nombre courant d'objets qu'il reste à sélectionner : NBO=NBO-NBL(n).
- (T4.2) Le frère du noeud courant qui est le plus proche de l'exemple, noté NTEB(n), devient le nouveau noeud courant : n=NTEB(n), et l'étape (T1) est réitérée.
- (T5) : Si le nombre de feuilles NBL(n) est supérieur au nombre d'objets qu'il reste à sélectionner (NBL (n)>NBO), le fils du noeud courant qui est le plus proche de l'exemple, noté NTEC(n), devient le nouveau noeud courant : n=NTEC(n), et l'étape (T1) est réitérée.

De façon avantageuse, le nombre d'objets à sélectionner NBO est fixé égal à un multiple du nombre de résultats NBR souhaités par l'utilisateur : NBO=$\alpha$. NBR. Dans ce cas le procédé de recherche selon l'invention comporte une étape supplémentaire (T6) pour ne retenir parmi les $\alpha$.NBR objets sélectionnés que les NBR objets les plus proches de l'exemple recherché. Par exemple, cette sélection supplémentaire effectuée à l'étape (T6) consiste en une comparaison systématique des $\alpha$.NBR objets sélectionnés avec l'exemple recherché.

**Revendications**

**1.** Procédé de partition d'un ensemble d'objets (X) comportant :

- une première étape itérative de partition (S0 à S3), qui utilise une première partition ($P_0$) constituée de classes contenant un objet, et qui à chaque itération (i) fond deux classes qui maximisent un critère de similarité pour créer une nouvelle partition ($P_{i+1}$) utilisée comme partition initiale pour l'étape suivante, jusqu'à obtenir une partition ($P_{N-1}$) ne contenant qu'une seule classe,
- une étape de sélection (S4), parmi les partitions obtenues, d'une partition ($PY_0$) comportant un nombre optimal de classes (M),

**caractérisé en ce qu'**il comporte :

- une étape (S6) de calcul d'éléments représentatifs ($Y_{0,j}$) des classes de la partition sélectionnée,
- une seconde étape itérative de partition (S7, S8) qui utilise la partition sélectionnée comme première partition courante ($PY_i$), et qui à chaque itération (i) crée une nouvelle partition ($PY_{i+1}$) en associant chaque objet dudit ensemble (X) à l'élément représentatif de la partition courante ($Y_{i,j}$) dont il est le plus proche, et calcule des éléments représentatifs ($Y_{i+1,j}$) des classes de la nouvelle partition ($PY_{i+1}$), la nouvelle partition constituant la partition courante pour l'itération suivante, jusqu'à ce que les éléments représentatifs de la nouvelle partition soient identiques aux éléments représentatifs de la partition courante ($Y_{i+1,j}=Y_{i,j}$).

**2.** Procédé de partition d'un ensemble d'objets selon la revendication 1, **caractérisé en ce que** lesdits objets sont des descriptions de type MPEG-7, et **en ce que** la proximité de deux objets est déterminée par rapport à un descripteur particulier.

**3.** Procédé de partition selon l'une des revendications 1 ou 2, **caractérisé en ce que** la proximité de deux objets est déterminée en utilisant une fonction de similarité f qui vérifie les propriétés suivantes :

- f est une application qui, à deux objets de l'ensemble de départ, associe un nombre réel,
- ce nombre réel est identique quelque soit l'ordre dans lequel on considère les deux objets,
- le nombre réel associé à deux objets identiques est supérieur au nombre réel associé à deux objets différents.

**4.** Procédé de partition multi-niveaux d'un ensemble d'objets, comportant :

- une étape de partition (SS1) qui utilise un procédé de partition selon la revendication 1 pour déterminer une partition ($PZ_j$) d'un groupe d'objets,
- une étape (SS2) de détermination d'éléments représentatifs ($R_{j,1}$, ..., $R_{j,Qj}$) des classes de la partition obtenue,
- une étape (SS3) de stockage desdits éléments représentatifs dans une structure arborescente,
- lesdites étapes étant exécutées une première fois avec un groupe d'objets constitué par ledit ensemble (X), puis répétées avec des groupes d'objets constitués par les classes ($C_{j,1}$, ..., $C_{j,Qj}$) des partitions obtenues ($PZ_j$), jusqu'à obtenir des classes qui répondent à un critère prédéterminé,
- une étape (SS5) de stockage de la dernière partition dans ladite structure arborescente.

**5.** Procédé de recherche d'un nombre prédéterminé d'objets les plus proches d'un exemple, dans une structure arborescente d'objets créée en utilisant un procédé de partition multi-niveaux selon la revendication 4, comportant des noeuds et des feuilles, ledit procédé consistant à exécuter les étapes suivantes de façon itérative :

- une étape (K2) de parcours de la structure arborescente à partir d'un noeud, vers des feuilles, en passant par les noeuds qui contiennent les éléments représentatifs les plus proches de l'exemple, pour sélectionner une ou plusieurs feuilles correspondant à un ou plusieurs objets,
- une étape (K2) de test pour vérifier si le nombre de feuilles sélectionnées est inférieur audit nombre prédéterminé,
- et, si le nombre de feuilles sélectionnées est inférieur audit nombre prédéterminé (K4), une nouvelle itération desdites étapes, à partir du noeud frère du dernier noeud parcouru, le plus proche dudit exemple.

**6.** Programme comportant des instructions de code de programme pour l'exécution d'un procédé de partition selon la revendication 1 lorsque ledit programme est exécuté par un processeur.

**7.** Programme comportant des instructions de code de programme pour l'exécution d'un procédé de partition multi-niveaux selon la revendication 4 lorsque ledit programme est exécuté par un processeur.

**8.** Programme comportant des instructions de code de programme pour l'exécution d'un procédé de recherche selon la revendication 5 lorsque ledit programme est exécuté par un processeur.

**9.** Equipement comportant des moyens de stockage et de traitement de données, dont notamment des moyens de mise en oeuvre d'un procédé selon la revendication 1.

**10.** Equipement comportant des moyens de stockage et de traitement de données, dont notamment des moyens de mise en oeuvre d'un procédé de partition multi-niveaux selon la revendication 4.

**11.** Equipement comportant des moyens de stockage et de traitement de données, dont notamment des moyens de mise en oeuvre d'un procédé de recherche selon la revendication 5.

$i=1$ — S0

$P_0 \{ C_{0,1},...,C_{0,N}\}$ — S1

$P_i \{ C_{i,1} ; ... ; C_{i,N-1}\}$ — S2

S3 — $i{+}{+}$ $\quad$ $i<N-1$ $\quad$ $i=N-1$ ?

$i=N-1$

$CI_i \implies PY_0$ — S4

$i=0$ — S5

$Y_{i,j}$ — S6

$PY_{i+1,j}$ — S7

$Y_{i+1,j}$ — S8

$i{+}{+}$ $\quad$ N $\quad$ $\forall\, j=1, ...,M \; Y_{i+1,j}=Y_{i,j}$ — S9

Y

$PZ=PY_{i+1}$ — S10

FIG.1

$$PZ_0 = \{C'_{0,0}\} = \{X\} \qquad \text{SS0}$$

$$\forall\, C'_{j-1,k} \in PZ_{j-1} \;\rightarrow\; PZ_j = \{C'_{j,1}\,;\,\ldots\,;\,C'_{j,Qj}\} \qquad \text{SS1}$$

$$\forall\, C'_{j,k} \in PZ_j \;(k=1,\ldots,Q_j) \rightarrow\; R_{j,k} \qquad \text{SS2}$$

$$R_{j,k} \rightarrow TR \qquad \text{SS3}$$

$$? \qquad \text{SS4}$$

SS5

$R_{j,1}$   $R_{j,2}$  ........   $R_{j,Qj}$

$C_{j,1} = \{X_a,\ X_b,\ \ldots\}$   $C_{j,Qj} = \{X_c,\ X_d,\ \ldots\}$

## FIG.2

$X_1$   $X_2$

## FIG.3

$X_3$   $X_4$   $X_5$   $X_6$

9

FIG.4

FIG.5

```
                    ┌─────────────────┐
                    │     NBO=n       │──⌐ T0
                    └─────────────────┘
                             │
                             ▼
    ┌──────────────→┌─────────────────┐
    │               │    NBL(n)= ?    │──⌐ T1
    │               └─────────────────┘
    │                        │
    │                        ▼
    │               ┌─────────────────┐
    │               │   NBL(n) / NBO  │──⌐ T2
    │               └─────────────────┘
    │     NBL(n)=NBO          │
    │  ┌──────────────────────┼──────────────────────────┐
    │  │              NBL(n)<NBO          NBL(n)>NBO      │
  T3 ⌐│ │            T4.0 ⌐                  ⌐            │
    │ ▼                    ▼                              ▼
    │ ┌───────────┐     ┌───────────┐          ┌──────────────┐
    │ │  S(n, xk) │     │  S(n,xk)  │          │  n=NTEC(n)   │
    │ └───────────┘     └───────────┘          └──────────────┘
    │      │                 │                         │ ⌐
    │      ▼                 ▼                         T5
    │ ┌──────────────────┐  ┌─────────────────┐
    │ │ NBO= α NBR → NBR │  │ NBO=NBO-NBL(n)  │──⌐ T4.1
    │ └──────────────────┘  └─────────────────┘
    │      ⌐                         │
    │     T6                         ▼
    │                     ┌─────────────────┐
    │                     │    n=NTEB(n)    │──⌐ T4.2
    └─────────────────────┴─────────────────┘
```

## FIG.6

Office européen
des brevets

**RAPPORT DE RECHERCHE EUROPEENNE**

Numéro de la demande

EP 01 20 4426

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int.Cl.7) |
| D,X | CHIDANANDA GOWDA K ET AL: "SYMBOLIC CLUSTERING USING A NEW DISSIMILARITY MEASURE" PATTERN RECOGNITION,US,PERGAMON PRESS INC. ELMSFORD, N.Y, vol. 24, no. 6, 1991, pages 567-578, XP000214973 ISSN: 0031-3203 Sections "6. Algorithm" "7. Determination of the Number of Clusters" * figure 1 * <br>--- | 1-3,6,7, 9,10 | G06K9/62 G06F17/30 |
| A | ALSABTI K ET AL: "An efficient space-partitioning based algorithm for the k-means clustering" METHODOLOGIES FOR KNOWLEDGE DISCOVERY AND DATA MINING. THIRD PACIFIC-ASIA CONFERENCE, PAKDD-99. PROCEEDINGS, PROCEEDINGS OF PAKDD-99, THIRD PACIFIC-ASIA CONFERENCE ON KNOWLEDGE DISCOVERY AND DATA MINING, BEIJING, CHINA, 26-28 APRIL 1999, pages 355-359, XP001015293 1999, Berlin, Germany, Springer-Verlag, Germany ISBN: 3-540-65866-1 Section "3. The New Algorithm" <br>--- <br>-/-- | 4 | |

DOMAINES TECHNIQUES
RECHERCHES (Int.Cl.7)

G06K
G06F

Le présent rapport a été établi pour toutes les revendications

| Lieu de la recherche | Date d'achèvement de la recherche | Examinateur |
|---|---|---|
| LA HAYE | 21 février 2002 | Granger, B |

**Office européen des brevets**

# RAPPORT DE RECHERCHE EUROPEENNE

Numéro de la demande

EP 01 20 4426

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | JEANNIN S ET AL: "Video motion representation for improved content access" 2000 DIGEST OF TECHNICAL PAPERS. INTERNATIONAL CONFERENCE ON CONSUMER ELECTRONICS. NINETEENTH IN THE SERIES (CAT. NO.00CH37102), 2000 DIGEST OF TECHNICAL PAPERS. INTERNATIONAL CONFERENCE ON CONSUMER ELECTRONICS. NINETEENTH IN THE SERIES, LOS ANGLES,, pages 284-285, XP001015350 2000, Piscataway, NJ, USA, IEEE, USA ISBN: 0-7803-6301-9 * le document en entier * ----- | 2,5 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 21 février 2002 | Granger, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)